# FASCICULE DE BREVET EUROPEEN

(11) **EP 2 265 828 B1**
(45) Date de publication et mention de la délivrance du brevet: **18.01.2017**
(21) Numéro de dépôt: 09727345.2
(22) Date de dépôt: 19.03.2009
(51) Int. Cl.: F16B 5/04, F16B 19/10

(54) **PROCEDE D'ASSEMBLAGE DE MATERIAUX COMPOSITES ET ORGANE DE RIVETAGE PERMETTANT DE LE METTRE EN OEUVRE**
MONTAGEVERFAHREN FÜR VERBUNDWERKSTOFFE UND NIETELEMENT ZU SEINER DURCHFÜHRUNG
METHOD FOR ASSEMBLING COMPOSITE HARDWARE, AND RIVETING MEMBER ENABLING IMPLEMENTATION THEREOF

(30) Priorité: 04.04.2008 FR 0852280; 09.07.2008 FR 0854657
(43) Date de publication de la demande: 29.12.2010
(73) Titulaire: ERIS, 31130 Flourens (FR)
(72) Inventeur: AURIOL, Pierre, 31130 Flourens (FR)
(74) Mandataire: Richebourg, Michel François
(86) Numéro de dépôt international: PCT/FR2009/050468
(87) Numéro de publication internationale: WO 2009/122112

(56) Documents cités:
- EP-A- 1 882 860
- US-A- 4 784 550
- US-B1- 6 749 384

## Description

### DOMAINE D'APPLICATION DE L'INVENTION

La présente invention a trait au domaine des rivets et notamment aux adaptations permettant leur utilisation pour la fixation des matériaux composites.

### DESCRIPTION DE L'ART ANTÉRIEUR

La fixation des matériaux composites au moyen de rivets présente diverses contraintes, parmi celles-ci :
- une bonne résistance en fatigue des assemblages doit être garantie,
- l'endommagement du matériau composite lors de la pose du rivet doit être évité,
- le phénomène de délaminage doit être évité,
- la résistance en cisaillement doit être optimisée,
- la tenue à l'arrachement en traction doit être optimisée,
- la pose ne doit pas nécessiter de fraisure du côté de la rivure,
- une pose correspondant à celle des rivets pleins actuels (par écrasement) doit pouvoir être réalisée afin d'exploiter les machines à riveter classiques,
- le coût doit être amélioré.

Les rivets pleins bien que peu onéreux ne sont pas adaptés à la fixation de pièces en matériaux composites. En effet, lors de son écrasement, la matière du rivet vient s'appuyer sur le coin ou rebord du trou pour former le bulbe (appelé également rivure). Cet appui est particulièrement élevé en termes d'effort et a pour conséquence de voir apparaître le phénomène de délaminage du fait du haut niveau de contraintes radiales localisées dans le rebord du trou.

Les rivets semi-tubulaires proposent une création de bulbe nécessitant moins d'effort pour former la rivure que pour un rivet plein mais ne proposent pas une tenue à la fatigue équivalente à celle d'un rivet plein.

Enfin, les rivets aveugles de fixation de structure prévoyant un sertissage permettent d'atteindre la plupart des objectifs visés mais à un coût particulièrement important aussi bien en fabrication qu'en outillage de pose.

### DESCRIPTION DE L'INVENTION

Partant du cahier des charges préétabli par les contraintes définies pour une fixation dans des matériaux composites, la demanderesse a mené des recherches qui ont abouti à la conception d'un procédé d'assemblage pour matériaux composites et d'un organe de rivetage permettant de le mettre en oeuvre particulièrement avantageux.

Selon l'invention, le procédé d'assemblage de pièces en matériaux composites utilise un organe de rivetage du type comprenant d'une part un insert, d'autre part une douille adaptée pour contenir au moins partiellement l'insert et possédant une extrémité munie d'une tête et une extrémité tubulaire apte à être déformée en vue de constituer un bulbe d'un côté des matériaux à assembler,
- un trou traversant les matériaux à assembler étant réalisé,
- la douille étant introduite et maintenue dans le trou avec sa tête en appui sur les rebords de l'extrémité du trou et de sorte que son extrémité tubulaire en dépasse de l'autre côté. Le procédé est remarquable en ce qu'il consiste :
- à utiliser une douille dont l'âme creuse présente deux sections différentes, une première section démarrant à partir de l'extrémité tubulaire à déformer présentant un premier diamètre et une deuxième section démarrant à la fin de la première section et de diamètre inférieur,
- à utiliser un insert ne présentant pas de surface fonctionnelle d'appui axiale à des fins de gonflement radial de la douille dans le trou mais dont le diamètre est apte à permettre son logement sans déformation dans la première section de l'âme creuse et apte à permettre son logement en force dans la deuxième section,
- à introduire axialement l'insert dans la douille de sorte que cette dernière gonfle radialement à l'intérieur du trou au niveau de sa petite section et que l'évidement défini par cette petite section soit occupé par ledit insert,
- à assurer au moyen d'une bouterolle, une pression à l'extrémité à déformer de la douille sur sa première section pour en assurer le pliage par extension radiale centrifuge.

Cette caractéristique est particulièrement avantageuse en ce qu'elle réunit les avantages des rivets pleins aux rivets semi tubulaires sans en grever le coût.

Ainsi, le gonflement de la douille à l'intérieur du trou ainsi que son remplissage par l'insert va permettre de garantir la tenue en fatigue ainsi qu'une bonne tenue en cisaillement. En outre, le pliage de l'extrémité tubulaire de la douille pour former le bulbe va permettre la création dudit bulbe sans grand effort. De plus, étant donné que le pliage va démarrer selon la longueur de l'insert simultanément, juste avant ou juste après que le gonflement ait commencé, c'est à dire alors qu'une partie de la douille vient se bloquer dans le trou, l'effort axial imprimé va obligatoirement tendre à faire plier la matière de la partie de douille située à l'extérieur c'est à dire non serrée à l'intérieur du trou. Ainsi, le bord côté rivure du trou traversant les matériaux à assembler est protégé de tout endommagement. Ainsi, une des caractéristiques du procédé d'assemblage de l'invention, est qu'il consiste à réaliser un trou sans fraisure dans le matériau composite du côté rivure. Le temps et l'outillage d'une telle opération ne sont plus ainsi nécessaires.

Une autre caractéristique participant à la protection de la rivure vient du fait que l'insert ne présente aucune surface axiale ayant pour fonction de déformer la douille ce qui, dans son mouvement axial à l'intérieur de la douille, permet de ne voir apparaître que des déformations radiales. L'insert ne va pas tasser la matière de la douille dans le rebord de la rivure. Au contraire, la présence de l'insert va servir de guide à la déformation de la partie extérieure de la douille pour que son pliage se réalise de façon uniforme. La réalisation d'un bulbe dans de bonnes conditions permet d'obtenir une fixation présentant une bonne tenue à l'arrachement. De plus, la configuration d'un tel organe de rivetage permet d'utiliser l'outillage classiquement exploité pour la mise en place d'un rivet plein.

Selon une autre caractéristique particulièrement avantageuse, le procédé consiste à pré-engager l'insert dans la première section de l'extrémité tubulaire de la douille préalablement à l'engagement de l'organe de rivetage dans le trou. Cette caractéristique évite de gérer la manutention de deux pièces et permet d'utiliser l'organe de rivetage de l'invention comme un rivet plein.

Le gonflement partiel ou total de la partie de douille placée à l'intérieur du trou assure un premier serrage du corps de douille à l'intérieur du trou. Néanmoins, pour optimiser la fixation, une autre caractéristique du procédé consiste à poursuivre le pliage jusqu'à sertir l'extrémité pliée sur l'insert ce qui contribue à la création d'une fixation de structure avec une tenue à l'arrachement optimisée.

Selon une autre caractéristique particulièrement avantageuse, le procédé d'assemblage de l'invention consiste à utiliser une douille dont l'évidement la traverse de part en part axialement et à insérer l'insert par l'extrémité de l'évidement débouchant de la tête.

Selon une autre caractéristique particulièrement avantageuse de l'invention permettant d'optimiser le verrouillage de la fixation, le procédé d'assemblage de l'invention consiste à utiliser une douille dont l'évidement la traverse de part en part et à insérer l'insert par l'extrémité tubulaire de la douille, l'insert comportant des dimensions telles que ses deux extrémités sont respectivement serties dans la tête de la douille d'une part et dans le bulbe formé par l'extrémité tubulaire de la douille d'autre part.

L'invention concerne également l'organe de rivetage permettant de mettre en oeuvre le procédé d'assemblage ci-dessus décrit.

Cet organe de rivetage est remarquable notamment en ce que l'évidement ménagé dans la partie tubulaire de la douille se prolonge jusque au-dessous la tête. Dans cette configuration, la douille comporte deux extrémités : une extrémité fermée équipée d'une tête et l'autre extrémité étant tubulaire débouchante, l'insertion se faisant alors par ladite extrémité distale.

Cette caractéristique permet de disposer de la plus grande longueur possible de partie de douille susceptible de gonfler dans le trou de façon à réaliser un gonflement et une mise sous contrainte la plus régulière possible des parois du trou. Selon une autre caractéristique, la longueur de la petite section correspond à l'épaisseur minimale des éléments en matériaux composites à fixer.

Selon une autre caractéristique, l'évidement ménagé dans la douille se prolonge dans la tête afin que l'extrémité de l'insert puisse être sertie dans ladite tête pour optimiser le verrouillage. Selon un mode préféré de réalisation, la section de l'évidement pratiqué dans la tête est inférieure à la section de plus petit diamètre de l'évidement pratiqué dans la douille.

Selon une autre caractéristique, l'extrémité de l'insert sur laquelle vient se sertir l'extrémité de douille pliée est préformée d'un évidement qui va faciliter sa déformation en requérant moins d'effort et en autorisant la déformation de la matière sans son tassement sur les bords du trou. Cet évidement peut être également réalisé sur l'autre extrémité de l'insert qui peut présenter alors une configuration symétrique.

De même, le sertissage peut être amélioré par l'aménagement extérieur de gorges ou de cannelures sur le corps de l'insert.

De même dans le cas où une des extrémités de l'insert vient se sertir dans la tête, ladite extrémité présente la forme d'une projection cylindrique coaxiale avec le reste de l'insert et dont l'extrémité libre est elle-même ménagée d'un évidement facilitant sa déformation.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif, plusieurs modes de réalisation d'un procédé d'assemblage et d'un organe de rivetage conformes à l'invention.

### BRÈVE DESCRIPTION DES DESSINS

La figure 1 est un dessin schématique d'une vue en coupe de la douille et de l'insert séparés composant un premier mode de réalisation d'un organe de rivetage conforme à l'invention,
La figure 2 est un dessin schématique d'une vue extérieure de la douille et de l'insert assemblés avec les arêtes cachées apparentes,
La figure 3 est un dessin schématique d'une vue extérieure d'un autre mode de réalisation de l'organe de rivetage,
La figure 4 est un dessin schématique d'une vue extérieure d'un autre mode de réalisation de l'organe de rivetage,
Les figures 5, 6, 7, 8 et 9 sont des vues en coupe d'un assemblage illustrant la mise en place de l'organe de rivetage,
Les figures 10, 11, 12, 13, 14 illustrent différents modes de réalisation de l'insert pour les modes de réalisation précités de l'organe de rivetage.

Les figures 15 et 16 illustrent en configuration prêt à être posé et en configuration une fois posé, un autre mode de réalisation d'un organe de rivetage conforme à l'invention.

### DESCRIPTION DES MODES DE RÉALISATION PRÉFÉRÉS

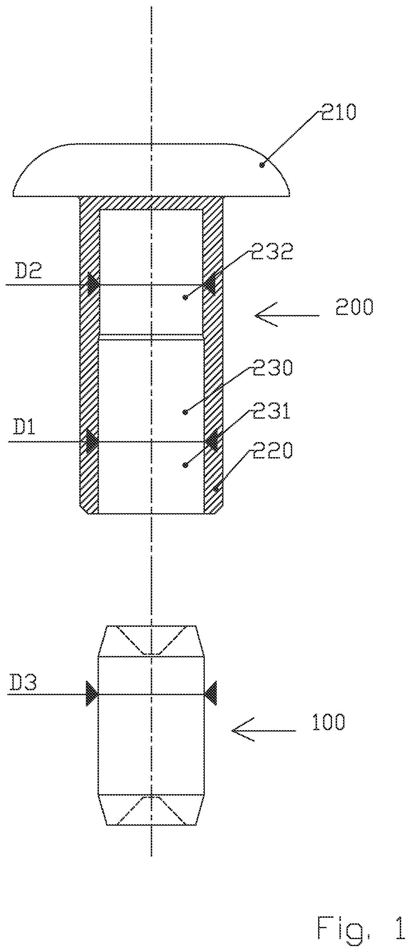

Tel qu'illustré sur le dessin de la figure 1, l'organe de rivetage référencé R dans son ensemble comprend deux parties :
- un insert 100,
- et une douille 200 adaptée pour contenir au moins partiellement l'insert et possédant une extrémité munie d'une tête 210 et une extrémité tubulaire 220 apte à être déformée en vue de constituer un bulbe d'un côté des matériaux à assembler.

Conformément à l'invention, l'âme creuse 230 présente deux sections différentes 231 et 232 c'est à dire des volumes des évidements cylindriques présentant des diamètres différents, une première section 231 démarrant à partir de l'extrémité tubulaire 220 à déformer présentant un premier diamètre D1 et une deuxième section 232 démarrant à la fin de la première section 232 et de diamètre D2 inférieur.

Ces évidements de diamètres différents viennent en adéquation avec l'insert 100 qui, ne présentant pas de surface fonctionnelle d'appui axial, présente un diamètre D3 apte à permettre son logement sans déformation dans la première section 231 de l'âme creuse 230 et à permettre son logement en force dans la deuxième section 232 à des fins de gonflement radial de la douille 100.

Ainsi, le plus grand diamètre D3 de l'insert 100 est inférieur ou légèrement supérieur au diamètre D1 de la première section afin de permettre son accueil sans effort et sans déformation et est plus grand que celui D2 de la deuxième section afin de provoquer la déformation de cette partie de douille 200 qui va se situer à l'intérieur du trou traversant les pièces à assembler. Comme illustrée, la deuxième section évidée de diamètre inférieur s'étend jusqu'au dessous de la tête de la douille.

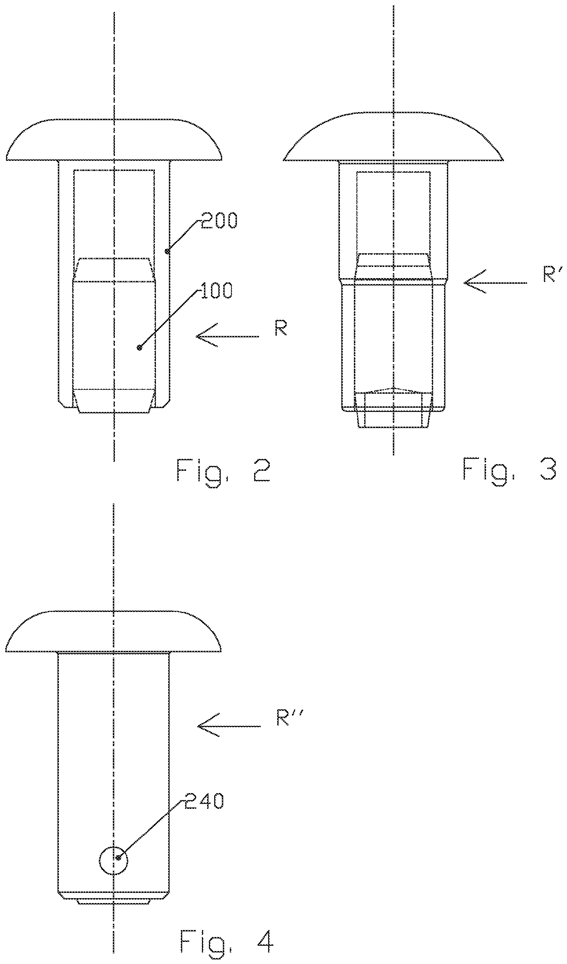

L'organe de rivetage se présente, comme illustré par les figures 2, 3 et 4, avec l'insert 100 pré-engagé dans la première partie de l'âme tubulaire afin qu'il puisse être géré comme un rivet plein. Ce pré-engagement est maintenu par un montage serré léger entre l'insert 100 et la première section 231 comme illustré en figures 2 et 3 ou bien par une déformation de la douille en trois points 240 disposés à 120 degrés à des fins de serrage de l'insert 100. Comme illustré, l'insert 100 dépasse hors de la douille 200 en position pré-engagée.

La figure 3 illustré plus spécifiquement un organe de rivetage R' dont l'épaisseur de la partie de douille à plier 220 est réduite également extérieurement de sorte que l'effort nécessaire à sa déformation soit réduit et que l'épaulement extérieur défini par la séparation entre les deux cylindres extérieurs facilite et délimite le pliage nécessaire à la création du bulbe.

Les matériaux utilisés pour réaliser l'insert et/ou la douille peuvent être choisis parmi ceux connus sous les désignations suivantes :
- titane T40,
- titane au columbium,
- inox A286,
- inox 304L,
- aluminium et ses alliages,
- etc...

Selon un mode de réalisation préféré pour des raisons de gain de poids, de faible coût et de simplicité de mise en oeuvre, l'insert est en plastique. Cet insert en plastique peut coopérer avec une douille en titane T40.

Selon un autre mode de réalisation préféré pour des raisons de résistance améliorée au cisaillement et de capacité d'allongement, l'insert est en titane grade 9.

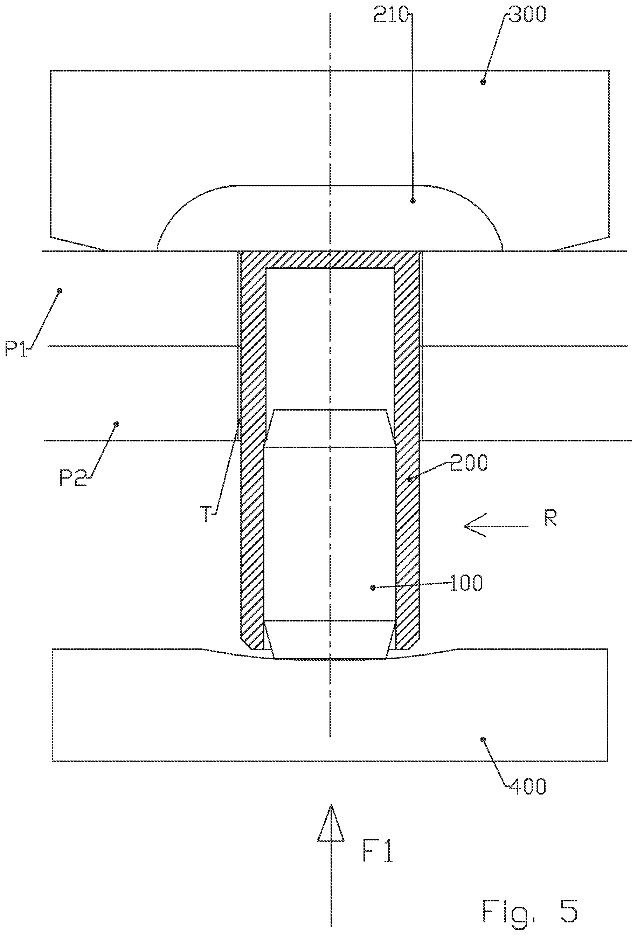

Les différentes étapes de l'assemblage mis en oeuvre par un tel organe de rivetage R vont maintenant être décrites en regard des dessins des figures 5 à 9.

Comme illustré sur le dessin de la figure 5, l'organe de rivetage R est disposé à l'intérieur d'un trou T traversant deux pièces en matériaux composites P1 et P2 à assembler. La tête 210 de la douille 200 vient en appui sur la surface extérieure de P1 autour du trou T. Le diamètre du trou T est tel que le corps de la douille pénètre avec jeu à l'intérieur. De plus, la portion "pliable" de la douille dépasse hors du trou T du côté de la pièce P2.

La tête de douille 210 est maintenue en position au moyen d'une bouterolle 300 fixe et une autre bouterolle mobile 400 est disposée côté rivure et vient en appui contre l'extrémité de l'insert 100 se projetant hors de la douille 200. Dans un mouvement symbolisé par la flèche F1, la bouterolle mobile 400 va exercer une pression axiale contre l'organe de rivetage R à des fins d'insertion de l'insert 100, expansion du corps de douille 200 disposé dans le trou, pliage du corps de douille 200 disposé à l'extérieur du trou T et sertissage du corps de douille 200 sur le corps de l'insert 100. Conformément à l'invention, la longueur de la petite section 232 correspond sensiblement à l'épaisseur minimale des pièces P1 et P2.

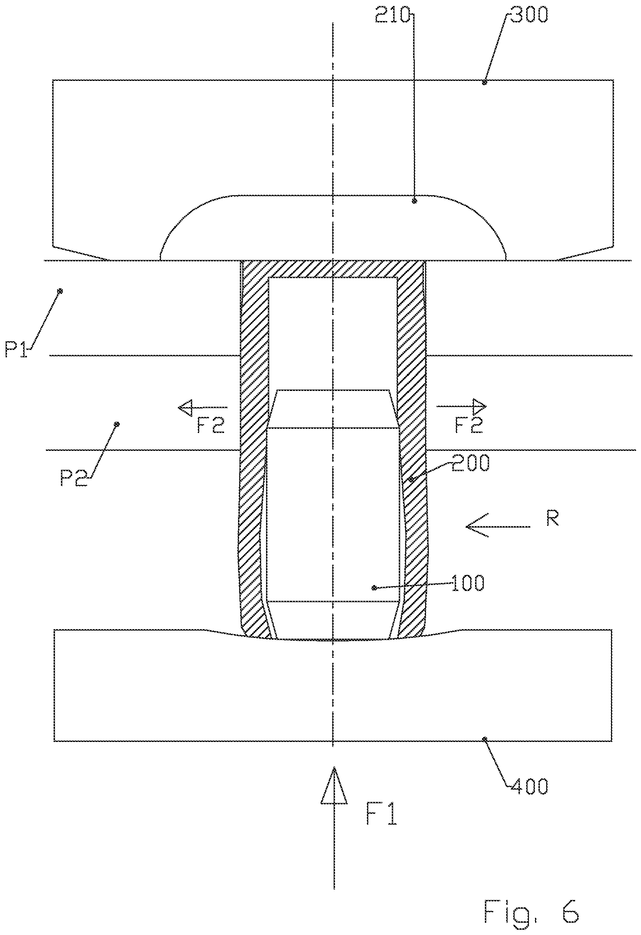

Comme illustré en figure 6, sous l'effet du mouvement de la bouterolle mobile 400, l'insert 100 démarre son insertion en force dans la partie de corps de douille se trouvant dans le trou T. Conformément à l'invention, cette insertion a pour effet un gonflement radial de la douille, selon les flèches F2, qui tend à plaquer la douille sur les parois du trou T et à assurer le comblement du jeu existant initialement entre la périphérie extérieure de la douille 200 et la surface intérieure du trou T.

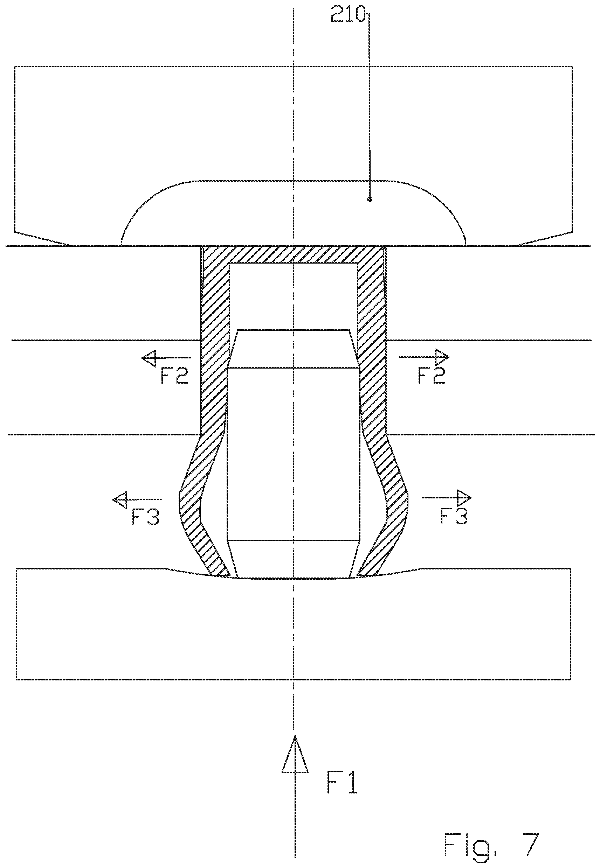

Comme illustré sur la figure 7, l'avancement de l'insert 100 à l'intérieur de la douille 200 permet un contact direct entre l'extrémité 220 de la douille 200 et la bouterolle mobile 400. Ainsi, au fur et à mesure du gonflement de la partie intérieure de la douille, la partie extérieure de la douille est soumise à la pression de la bouterolle 400 qui provoque le début du pliage centrifuge par expansion radiale selon les flèches F3 de la partie extérieure de douille 200. Le gonflement préalable de la partie de douille 200 située à l'intérieur du trou T permet de bloquer toute possibilité de mouvement axial de la matière de la douille 200 à l'intérieur du trou T ce qui permet de créer un appui qui va provoquer le pliage de la partie extérieure et ce qui évite l'endommagement du rebord du trou T.

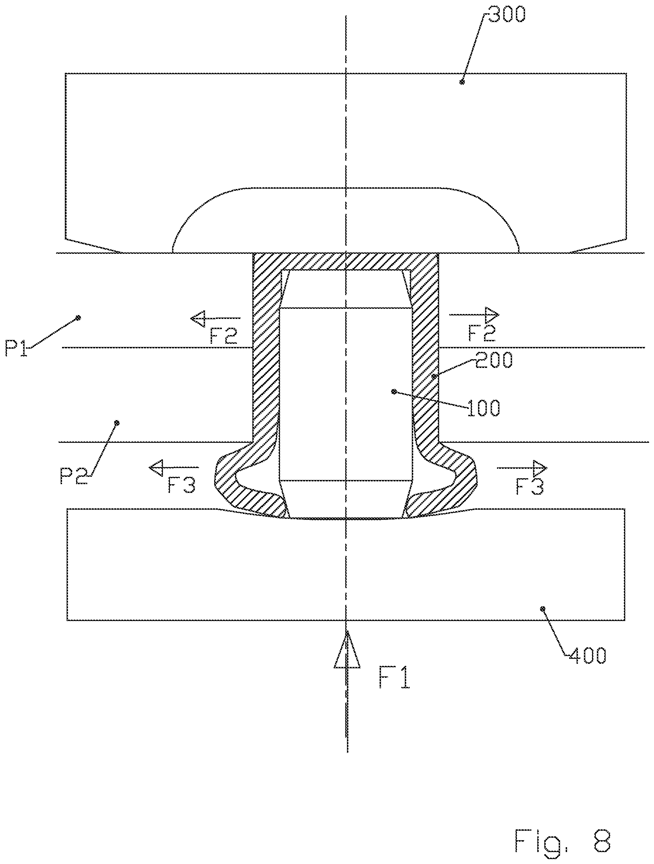

Comme illustré sur le dessin de la figure 8, tout en réalisant, de par ses dimensions adaptées le gonflement de la partie de la douille 200 située à l'intérieur du trou T, l'insert 100 vient s'appuyer en fond de portion tubulaire et occuper la totalité de l'évidement intérieur de cette partie de douille 200 faisant passer ainsi l'organe de rivetage R dans une configuration de type rivet plein. Grâce à cette configuration, la quasi totalité de la surface extérieure de la partie de douille située à l'intérieur du trou T a subi un gonflement dont le retour élastique sera négligeable ce qui permet de maintenir des contraintes radiales à l'intérieur du trou T. De plus, l'extrémité extérieure de la douille 200 qui subit le pliage est guidée pendant cette opération par le corps de l'insert garantissant une régularité dans la déformation.

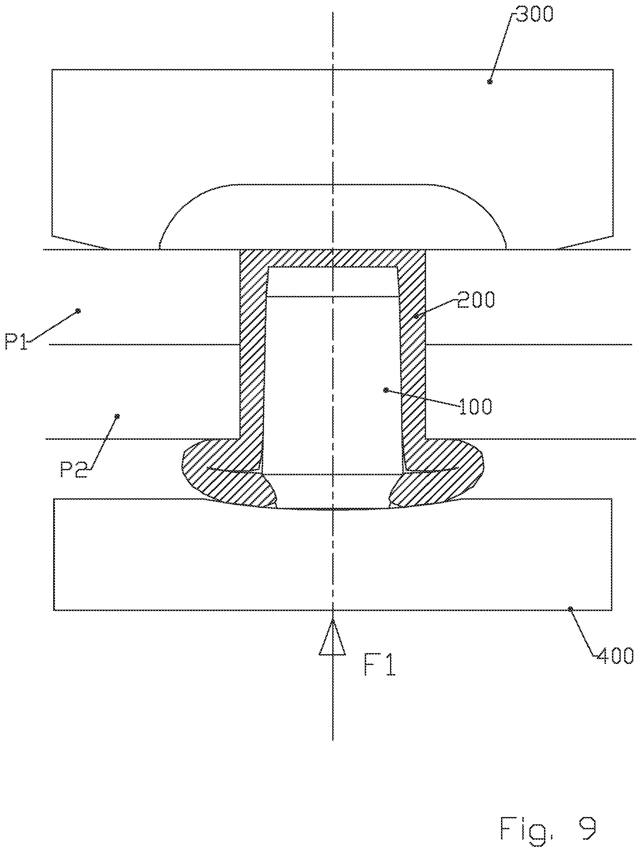

Comme illustrée sur le dessin de la figure 9, la poursuite du mouvement axial de la bouterolle 400 selon la flèche F1 termine le pliage de la douille 200 pour la création d'un bulbe venant prendre appui sur la pièce P2 autour du trou T. De plus, l'insert 100 va se déformer et l'extrémité du bulbe va se sertir sur le corps de l'insert 100 à des fins de garantie de blocage.

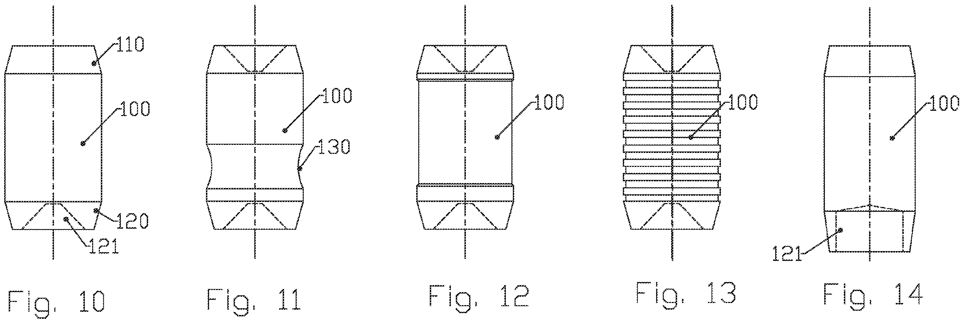

Afin de faciliter cette déformation finale ainsi que le sertissage plusieurs modes de réalisation d'insert 100 ont été imaginés. Ainsi par exemple, la figure 10 montre un insert 100 de forme générale cylindrique dont les deux extrémités 110 et 120 sont chanfreinées extérieurement et dont l'extrémité 120 correspond à celle sur laquelle va venir se sertir la douille 200 comporte un évidement 121 facilitant sa déformation.

La figure 11 montre un mode de réalisation d'un insert 100 dont le corps est préformé d'une gorge 130 située près de l'extrémité 120 et dont les deux extrémités sont ménagées d'un évidement.

La figure 12 montre un insert dont le corps est ménagé sur la quasi totalité de sa périphérie d'un rétrécissement de son diamètre.

La figure 13 montre un insert 100 dont le corps est ménagé de cannelures qui vont faciliter le sertissage.

Les modes de réalisation illustrés par les dessins des figures 1, 11, 12 et 13, montre un évidement ménagé aux deux extrémités de l'insert.

Enfin, la figure 14 illustre un évidement 121 permettant une déformation avec moins d'effort de l'extrémité 120 de l'insert.

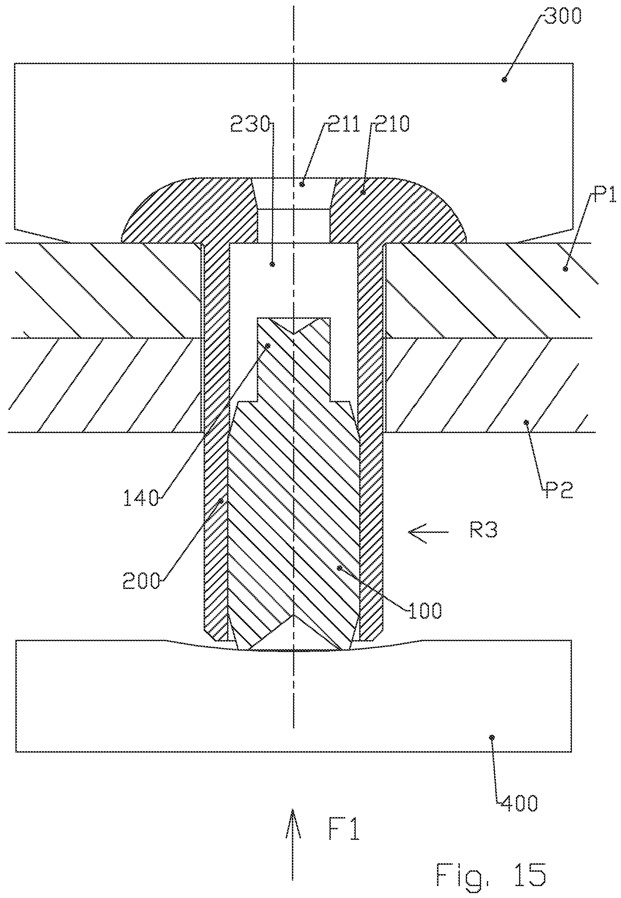

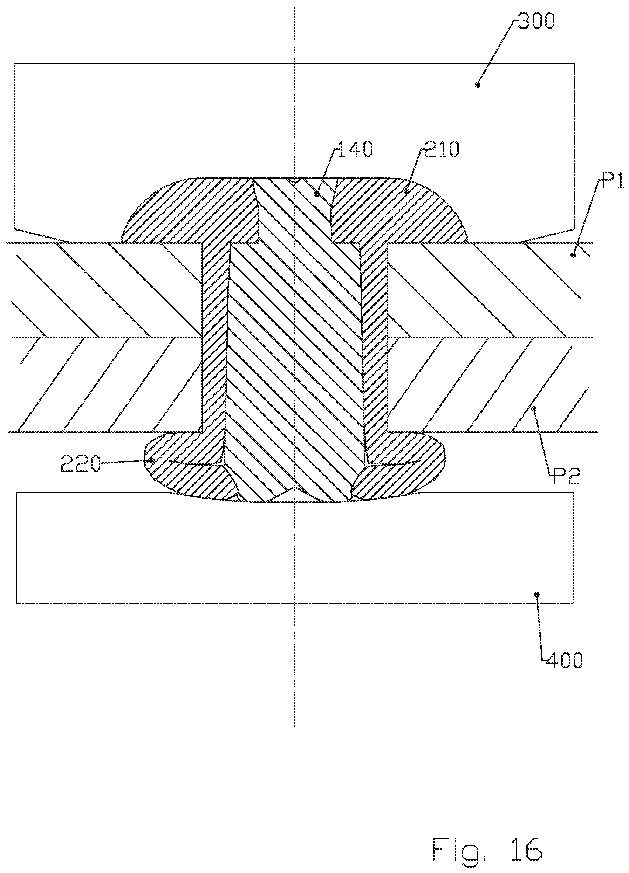

Comme illustré sur les dessins des figures 15 et 16, l'organe de rivetage R3 est équipé d'une douille 200 dont l'évidement 230 la traverse de part en part. L'insert 100 adapté comporte des dimensions telles que ses deux extrémités sont respectivement serties dans la tête de la douille 210 d'une part et dans le bulbe formé par l'extrémité tubulaire 200 de la douille une fois pliée d'autre part.

Comme illustré, l'évidement 230 ménagé dans la douille 200 se prolonge dans la tête 210 afin que l'extrémité de forme adaptée 140 de l'insert 100 puisse être sertie dans ladite tête 210 pour optimiser le verrouillage. L'insertion est réalisée par l'extrémité tubulaire débouchante non équipée de la tête. Selon le de réalisation illustré, la section de l'évidement 211 pratiqué dans la tête 210 est inférieure à la section 232 de plus petit diamètre D2 de l'évidement 230 pratiqué dans la douille.

L'extrémité 140 de l'insert qui vient se sertir dans la tête par le mouvement de translation symbolisé par la flèche F1 présente la forme d'une projection cylindrique coaxiale avec le reste de l'insert et dont l'extrémité libre est elle même ménagée d'un évidement facilitant sa déformation. Pour l'accueillir, l'évidement 211 pratiqué dans la tête s'évase dans le sens de la progression de l'insert dans la douille pour accueillir le volume de la matière déformée de la tête 140 de l'insert 100 et optimiser ainsi le verrouillage.

On comprend que les procédés et organes de rivetage, qui viennent d'être ci-dessus décrits et représentés, l'ont été en vue d'une divulgation plutôt que d'une limitation. Bien entendu, divers aménagements, modifications et améliorations pourront être apportés à l'exemple ci-dessus, sans pour autant sortir du cadre de l'invention.

Ainsi par exemple, bien que le mode de réalisation présenté illustre un rivet ménagé d'un tête protubérante, l'organe de rivetage peut être du type de celui comprenant une douille à tête fraisée.

## Revendications

1. Procédé d'assemblage de pièces (P1 et P2) en matériaux composites au moyen d'un organe de rivetage (R) du type comprenant d'une part un insert (100), d'autre part une douille (200) adaptée pour contenir au moins partiellement l'insert (100) et possédant une extrémité munie (210) d'une tête,
- un trou (T) traversant les matériaux à assembler étant réalisé,
- la douille (200) étant introduite et maintenu dans le trou (T) avec sa tête en appui sur les rebords de l'extrémité du trou,
**CARACTÉRISÉ EN CE QUE**
- la douille (200) possède une extrémité tubulaire (220) apte à être déformée en vue de constituer un bulbe d'un côté des matériaux à assembler,
- la douille (200) est introduite et maintenue dans le trou (T) de sorte que son extrémité tubulaire en dépasse de l'autre côté,
ledit procédé consiste :
- à utiliser une douille (200) dont l'âme creuse (230) présente deux sections différentes (231 et 232), une première section (231) démarrant à partir de l'extrémité tubulaire (220) à déformer présentant un premier diamètre (D1) et une deuxième section (232) démarrant à la fin de la première section et de diamètre (D2) inférieur,
- à utiliser un insert (100) ne présentant pas de surface fonctionnelle d'appui axiale à des fins de gonflement radial de la douille (200) dans le trou (T) mais dont le diamètre (D3) est apte à permettre son logement sans déformation dans la première section (231) de l'âme creuse (230) et est apte à permettre son logement en force dans la deuxième section (232),
- à introduire axialement l'insert (100) dans la douille (200) de sorte que cette dernière gonfle radialement à l'intérieur du trou (T) au niveau de sa petite section (232) et que l'évidement défini par cette petite section soit occupé par ledit insert (100),
- et à assurer au moyen d'une bouterolle (400), une pression à l'extrémité à déformer de la douille (200) sur sa première section (231) pour en assurer le pliage par extension radiale centrifuge.

2. Procédé selon la revendication 1, **CARACTÉRISÉ EN CE QU'**il consiste à préengager l'insert (100) dans la première section (231) de l'extrémité tubulaire de la douille (200) préalablement à l'engagement de l'organe de rivetage (R) dans le trou (T).

3. Procédé selon la revendication 1, **CARACTÉRISÉ EN CE QU'**il consiste à assurer l'insertion en force de l'insert (100) dans la deuxième section (232) et le pliage de la première section (231) dans le même mouvement de bouterolle (400) de sorte que ledit pliage soit guidé par le corps de l'insert (100).

4. Procédé selon la revendication 1, **CARACTÉRISÉ EN CE QU'**il consiste à poursuivre le pliage jusqu'à sertir l'extrémité pliée (220) sur l'insert (100).

5. Procédé selon la revendication 1, **CARACTÉRISÉ EN CE QU'**il consiste à réaliser un trou (T) sans fraisure dans le matériau composite du côté bulbe.

6. Procédé d'assemblage selon la revendication 1, **CARACTÉRISÉ EN CE QU'**il consiste à utiliser une douille (200) dont l'évidement (230) la traverse de part en part axialement et à insérer l'insert (100) par l'extrémité de l'évidement débouchant de la tête (210).

7. Procédé d'assemblage selon l'une quelconque des revendications 1 à 6, **CARACTÉRISÉ EN CE QU'**il consiste à utiliser une douille (200) dont l'évidement (230) la traverse de part en part et à insérer l'insert par l'extrémité tubulaire (220) de la douille, l'insert (100) comportant des dimensions telles que ses deux extrémités sont respectivement serties dans la tête (210) de la douille d'une part et dans le bulbe formé par l'extrémité tubulaire (220) de la douille d'autre part.

8. Organe de rivetage (R) permettant de mettre en oeuvre le procédé d'assemblage selon la revendication 1, **CARACTÉRISÉ PAR LE FAIT QUE** l'évidement (230) ménagé dans la partie tubulaire (220) de la douille (200) se prolonge jusqu'au dessous de la tête (210).

9. Organe de rivetage (R) permettant de mettre en oeuvre le procédé d'assemblage selon la revendication 1, **CARACTÉRISÉ PAR LE FAIT QUE** l'extrémité (120) de l'insert (100) sur laquelle vient se sertir l'extrémité de douille pliée est préformé d'un évidement (121) autorisant le tassement de la matière.

10. Organe de rivetage (R) permettant de mettre en oeuvre le procédé d'assemblage selon la revendication 1, **CARACTÉRISÉ PAR LE FAIT QUE** l'insert (100) est maintenu dans sa position préengagée par déformation de la première section (23) de douille (200) à des fins de serrage.

11. Organe de rivetage (R) permettant de mettre en oeuvre le procédé d'assemblage selon la revendication 1 **CARACTÉRISÉ PAR LE FAIT QUE** ledit insert (100) est ménagé extérieurement de cannelures pour faciliter le sertissage.

12. Organe de rivetage (R) permettant de mettre en oeuvre le procédé d'assemblage selon la revendication 1, **CARACTÉRISÉ PAR LE FAIT QUE** ledit insert (100) est ménagé extérieurement d'un ou plusieurs évidements (130).

13. Organe de rivetage (R) permettant de mettre en oeuvre le procédé d'assemblage selon la revendication 1 **CARACTÉRISÉ PAR LE FAIT QUE** la longueur de la petite section (232) correspond à l'épaisseur minimale des éléments (P1 et P2) en matériaux composites à fixer.

14. Organe de rivetage permettant de mettre en oeuvre le procédé selon la revendication 1, **CARACTÉRISÉ PAR LE FAIT QU'**il est équipé d'une douille (200) dont l'évidement (230) la traverse de part en part, l'insert (100) adapté comportant des dimensions telles que ses deux extrémités sont respectivement serties dans la tête de la douille (210) d'une part et dans le bulbe formé par l'extrémité tubulaire (200) de la douille une fois pliée d'autre part.

15. Organe de rivetage selon la revendication 14, **CARACTÉRISÉ PAR LE FAIT QUE** l'extrémité (140) de l'insert (100) qui vient se sertir dans la tête (210) présente la forme d'une projection cylindrique coaxiale avec le reste de l'insert (100) et **PAR LE FAIT QUE** l'évidement (211) pratiqué dans la tête s'évase dans le sens de la progression de l'insert (100) dans la douille pour accueillir le volume de la matière déformée de la tête (140) de l'insert (100).

## Patentansprüche

1. Verfahren zum Zusammensetzen von Teilen (P1 und P2) aus Verbundmaterialien mithilfe eines Nietelements (R) in der Art einerseits einen Einsatz (100), und andererseits eine Buchse (200) umfassend, die geeignet ist, um den Einsatz (100) zumindest teilweise zu enthalten, und ein Ende besitzend, welches mit einem Kopf versehen (210) ist,
- wobei ein Loch (T), welches durch die zusammenzusetzenden Materialien führt, erstellt wird,
- wobei die Buchse (200) in das Loch (T) eingeführt, und mit ihrem Kopf an den Rändern am Ende des Loches anliegend gehalten wird,
**dadurch gekennzeichnet, dass**
- die Buchse (200) ein rohrförmiges Ende (220) besitzt, das imstande ist, sich zu verformen, um auf einer Seite der zusammenzusetzenden Materialien einen Wulst zu bilden,
- die Buchse (200) in das Loch (T) eingeführt, und derart gehalten wird, dass ihr rohrförmiges Ende auf der anderen Seite übersteht,
wobei das besagte Verfahren darin besteht:
- eine Buchse (200) zu verwenden, deren hohler Kern (230) zwei unterschiedliche Querschnitte (231 und 232) aufweist, einen ersten Querschnitt (231), der ab dem zu verformenden rohrförmigen Ende (220) beginnt und einen ersten Durchmesser (D1) aufweist, und einen zweiten Querschnitt (232), der am Ende des ersten Querschnitts beginnt und mit einem kleineren Durchmesser (D2),
- einen Einsatz (100) zu verwenden, der keine funktionelle axiale Auflagefläche aufweist, um die Buchse (200) im Loch (T) radial aufzublähen, dessen Durchmesser (D3) jedoch imstande ist, dessen Aufnahme ohne Verformung im ersten Querschnitt (231) des hohlen Kerns (230) zu ermöglichen und der imstande ist, dessen erzwungene Aufnahme im zweiten Querschnitt (232) zu ermöglichen,
- den Einsatz (100) axial in die Buchse (200) einzuführen, sodass sich letztere im Inneren des Loches (T) im Bereich ihres kleinen Querschnitts (232) radial aufbläht, und die Aussparung, die durch diesen kleinen Querschnitt definiert wird, durch den besagten Einsatz (100) besetzt wird,
- und anhand eines Döppers (400) einen Druck auf das zu verformende Ende der Buchse (200) auf ihren ersten Querschnitt (231) auszuüben, um die Biegung durch zentrifugale radiale Ausdehnung durchzuführen.

2. Verfahren nach Anspruch 1, **dadurch gekennzeichnet, dass** es darin besteht, den Einsatz (100) vor dem Anbringen des Nietelements (R) im Loch (T) in den ersten Querschnitt (231) des rohrförmigen Endes der Buchse (200) vorab anzubringen.

3. Verfahren nach Anspruch 1, **dadurch gekennzeichnet, dass** es darin besteht, die erzwungene Einführung des Einsatzes (100) in den zweiten Querschnitt (232) und die Biegung des ersten Querschnitts (231) bei derselben Bewegung des Döppers (400) durchzuführen, sodass die besagte Biegung durch den Korpus des Einsatzes (100) geführt wird.

4. Verfahren nach Anspruch 1, **dadurch gekennzeichnet, dass** es darin besteht, die Biegung fortzusetzen, bis das gebogene Ende (220) am Einsatz (100) gebördelt ist.

5. Verfahren nach Anspruch 1, **dadurch gekennzeichnet, dass** es darin besteht, ein Loch (T) ohne Ausfräsung im Verbundmaterial auf Seiten des Wulstes zu erstellen.

6. Verfahren zum Zusammensetzen nach Anspruch 1, **dadurch gekennzeichnet, dass** es darin besteht, eine Buchse (200) zu verwenden, deren Aussparung (230) axial von einem Ende zum anderen durch sie hindurchführt, und den Einsatz (100) über das Ende der Aussparung einzuführen, die aus dem Kopf (210) mündet.

7. Verfahren zum Zusammensetzen nach einem der Ansprüche 1 bis 6, **dadurch gekennzeichnet, dass** es darin besteht, eine Buchse (200) zu verwenden, deren Aussparung (230) axial von einem Ende zum anderen durch sie hindurchführt, und den Einsatz über das rohrförmige Ende (220) der Buchse einzuführen, wobei der Einsatz (100) solche Abmessungen umfasst, dass seine beiden Enden jeweils im Kopf (210) der Buchse einerseits, und im Wulst, der durch das rohrförmige Ende (220) der Buchse gebildet wird, andererseits gebördelt werden.

8. Nietelement (R), welches es ermöglicht, das Verfahren zum Zusammensetzen nach Anspruch 1 umzusetzen, **dadurch gekennzeichnet, dass** sich die Aussparung (230), die im rohrförmigen Abschnitt (220) der Buchse (200) angeordnet ist, bis unter den Kopf (210) fortsetzt.

9. Nietelement (R), welches es ermöglicht, das Verfahren zum Zusammensetzen nach Anspruch 1 umzusetzen, **dadurch gekennzeichnet, dass** das Ende (120) des Einsatzes (100), an dem das gebogene Buchsenende angebördelt wird, mit einer Aussparung (121) vorgeformt ist, die das Abflachen der Materie erlaubt.

10. Nietelement (R), welches es ermöglicht, das Verfahren zum Zusammensetzen nach Anspruch 1 umzusetzen, **dadurch gekennzeichnet, dass** der Einsatz (100) zum Klemmen durch Verformen des ersten Querschnitts (23) der Buchse (200) in seiner vorab angebrachten Position gehalten wird.

11. Nietelement (R), welches es ermöglicht, das Verfahren zum Zusammensetzen nach Anspruch 1 umzusetzen, **dadurch gekennzeichnet, dass** der besagte Einsatz (100) außen mit Rillen versehen ist, um das Bördeln zu erleichtern.

12. Nietelement (R), welches es ermöglicht, das Verfahren zum Zusammensetzen nach Anspruch 1 umzusetzen, **dadurch gekennzeichnet, dass** der besagte Einsatz (100) außen mit einer oder mit mehreren Aussparungen (130) versehen ist.

13. Nietelement (R), welches es ermöglicht, das Verfahren zum Zusammensetzen nach Anspruch 1 umzusetzen, **dadurch gekennzeichnet, dass** die Länge des kleinen Querschnitts (232) der Mindeststärke der Elemente (P1 und P2) aus Verbundmaterialien entspricht, die es zu befestigen gilt.

14. Nietelement (R), welches es ermöglicht, das Verfahren zum Zusammensetzen nach Anspruch 1 umzusetzen, **dadurch gekennzeichnet, dass** es mit einer Buchse (200) ausgestattet ist, deren Aussparung (230) von einem Ende zum anderen durch sie hindurchführt, wobei der Einsatz (100) geeignet ist und Abmessungen umfasst, die dergestalt sind, dass seine beiden Enden jeweils im Kopf der Buchse (210) einerseits, und im Wulst, der durch das rohrförmige Ende (200) der Buchse gebildet wird, sobald sie gebogen ist, andererseits gebördelt werden.

15. Nietelement nach Anspruch 14, **dadurch gekennzeichnet, dass** das Ende (140) des Einsatzes (100), das im Kopf (210) gebördelt wird, mit dem Rest des Einsatzes (100) die Form eines koaxialen zylindrischen Vorsprungs aufweist, und dadurch, dass sich die Aussparung (211), die im Kopf praktiziert wird, in Richtung des Fortschritts des Einsatzes (100) in der Buchse ausweitet, um das Volumen der verformten Materie des Kopfes (140) des Einsatzes (100) aufzunehmen.

## Claims

1. Method of assembling parts (P1 and P2) made from composite materials by means of a riveting member (R) of the type comprising firstly an insert (100) and secondly a sleeve (200) adapted to at least partially contain the insert (100) and having an end (210) provided with a head,
- a hole (T) passing through the materials to be assembled being produced,
- the sleeve (200) being introduced and held in the hole (T) with its head in abutment on the rims of the end of the hole,
**characterised in that** :
- the sleeve (200) has a tubular end (220) able to be deformed with a view to constituting a bulb on one side of the materials to be assembled,
- the sleeve (200) is introduced and held in the hole (T) so that its tubular end projects therefrom on the other side,
said method consists of :
- using a sleeve (200) the hollow core (230) of which has two different sections (231 and 232), a first section (231) starting from the tubular end (220) to be deformed having a first diameter (D1) and a second section (232) starting at the end of the first section and with a lesser diameter (D2),
- using an insert (100) not having a functional axial bearing surface for purposes of radial swelling of the sleeve (200) in a hole (T) but the diameter (D3) of which is able to allow housing thereof without deformation in the first section (231) of the hollow core (230) and able to allow forcible housing thereof in the second section (232),
- axially introducing the insert (100) in the sleeve (200) so that the latter swells radially inside the hole (T) at its small section (232) and the recess defined by this small section is occupied by said insert (100),
- and providing, by means of a riveting die (400), a pressure at the end of the sleeve (200) to be deformed on its first section (231) in order to ensure folding thereof by centrifugal radial extension.

2. Method according to claim 1, **characterised in that** it consists of pre-engaging the insert (100) in the first section (231) of the tubular end of the sleeve (200) prior to the engagement of the riveting member (R) in the hole (T).

3. Method according to claim 1, **characterised in that** it consists of ensuring the forcible insertion of the insert (100) in the second section (232) and the folding of the first section (231) in the same movement of the riveting die (400) so that said folding is guided by the body of the insert (100).

4. Method according to claim 1, **characterised in that** it consists of continuing the folding until the folded end (220) is crimped on the insert (100).

5. Method according to claim 1, **characterised in that** it consists of producing a hole (T) without countersink in the composite material on the bulb side.

6. Assembly method according to claim 1, **characterised in that** it consists of using a sleeve (200) the recess (230) of which passes right through it axially and inserting the insert (100) through the end of the recess emerging in the head (210).

7. Assembly method according to any one of claims 1 to 6, **characterised in that** it consists of using a sleeve (200) the recess (230) of which passes right through it and inserting the insert through the tubular end (220) of the sleeve, the insert (100) comprising dimensions such that its two ends are respectively crimped in the head (210) of the sleeve on the one hand and in the bulb formed by the tubular end (220) of the sleeve on the other hand.

8. Riveting member (R) for implementing the assembly method according to claim 1, **characterised by** the fact that the recess (230) provided in the tubular part (220) of the sleeve (200) is extended below the head (210).

9. Riveting member (R) for implementing the assembly method according to claim 1, **characterised by** the fact that the end (120) of the insert (100) on which the folded sleeve end is crimped is preformed with a recess (121) enabling the material to be packed.

10. Riveting member (R) for implementing the assembly method according to claim 1, **characterised by** the fact that the insert (100) is held in its pre-engaged position by deformation of the first section (23) of the sleeve (200) for clamping purposes.

11. Riveting member (R) for implementing the assembly method according to claim 1, **characterised by** the fact that said insert (100) is provided externally with flutes for facilitating the crimping.

12. Riveting member (R) for implementing the assembly method according to claim 1, **characterised by** the fact that said insert (100) is provided externally with one or more recesses (130).

13. Riveting member (R) for implementing the assembly method according to claim 1, **characterised by** the fact that the length of the small section (232) corresponds to the minimum thickness of the elements (P1 and P2) made from composite materials to be fixed.

14. Riveting member for implementing the method according to claim 1, **characterised by** the fact that it is equipped with a sleeve (200) the recess (230) of which passes right through it, the adapted insert (100) comprising dimensions such that its two ends are respectively crimped in the head of the sleeve (210) on the one hand and in the bulb formed by the tubular end (200) of the sleeve once folded on the other hand.

15. Riveting member according to claim 14, **characterised by** the fact that the end (140) of the insert (100) that is crimped in the head (210) is in the form of a cylindrical projection coaxial with the rest of the insert (100) and by the fact that the recess (211) formed in the head splays in the direction of the progression of the insert (100) in the sleeve in order to accept the volume of the deformed material of the head (140) of the insert (100).
